Europäisches Patentamt

European Patent Office

Office européen des brevets

(11) Veröffentlichungsnummer: **0 009 462**
**B1**

(12) **EUROPÄISCHE PATENTSCHRIFT**

(45) Veröffentlichungstag der Patentschrift: 22.06.83

(21) Anmeldenummer: **79810074.9**

(22) Anmeldetag: **24.08.79**

(51) Int. Cl.³: **B 21 D 43/28,** B 30 B 15/32

(54) **Verfahren zum Wegführen und Stapeln von hinter der Schneidstelle einer Blechschere anfallenden Blechabschnitten und Einrichtung zur Ausübung des Verfahrens.**

(30) Priorität: **19.09.78 DE 2840668**

(43) Veröffentlichungstag der Anmeldung:
**02.04.80 Patentblatt 80/7**

(45) Bekanntmachung des Hinweises auf die Patenterteilung:
**22.06.83 Patentblatt 83/25**

(84) Benannte Vertragsstaaten:
**AT BE CH FR GB IT LU NL SE**

(56) Entgegenhaltungen:
**DE - A - 2 209 663**
**DE - A - 2 552 995**
**DE - B - 1 652 759**
**DE - B - 2 325 519**
**US - A - 3 670 611**
**US - A - 4 040 318**

**Zeitschrift "Werkstattstechnik", 1965, Heft 5,
Seite 224**

(73) Patentinhaber: **HAEMMERLE AG
CH-4800 Zofingen (CH)**

(72) Erfinder: **Haenni, Eduard A.,Dipl.-Ing.
Rosengartenstrasse 10
CH-4800Zofingen (CH)**
Erfinder: **Ragettli, Cristian
Im Langstuck 20
CH-8044 Gockhausen (CH)**

(74) Vertreter: **Rottmann, Richard, Dipl.-Ing.
Rottmann Patentanwälte AG Dufourstrasse 101
CH-8008 Zürich (CH)**

## Verfahren zum Wegführen und Stapeln von hinter der Schneidestelle einer Blechschere anfallenden Blechabschnitten und Einrichtung zur Ausübung des Verfahrens

Die Erfindung betrifft ein Verfahren und eine Einrichtung zum Wegführen und Stapeln von hinter der Schneidestelle einer Blechschere anfallenden Blechabschnitten.

Es ist bereits eine Blechschere für Bleche mit hochempfindlicher Oberfläche bekanntgeworden, welche einen Blechzuführtisch aufweist, an dessen einem quer zur Blechvorschubrichtung verlaufenden Rand ein Untermesser befestigt ist. In der Blechvorschubrichtung ist im Abstand vom Untermesser ein Blechanschlag angeordnet, wobei ein bewegliches Obermesser das üuber das Untermesser bis zum Blechanschlag verschobene Blech in Zusammenarbeit mit dem Untermesser abschert, sodass Blechstreifen entstehen. Für die Blechstreifen ist eine ein- und ausfahrbare Stützeinrichtung vorhanden, die diese vor dem und während des Abscherens abstützt und deren Stützebene in Fortsetzung der Oberfläche des Blechzuführtisches angeordnet ist. Bei dieser Blechschere besteht die Stützeinrichtung aus einem in der Stützebene in den Zwischenraum zwischen Untermesser und Blechanschlag hinein- und aus diesem herausbewegbaren Stütztisch, welcher aus zwei oder mehreren parallelen Leisten zusammengesetzt ist. Bei Schnittbeginn werden die Leisten des Stütztisches mittels einer Antriebseinheit schlagartig zurückgezogen, sodass der abgescherte Blechstreifen nach unten auf einen Stapel fällt.

Bei dieser Ausführung ist die Lage des Stapels direkt hinter den Messern genau bestimmt und kann nicht geändert werden. Unabhängig von der Grösse der gebildeten Blechstreifen fallen diese alle auf den gleichen Stapel. Es ist deshalb unvermeidlich, dass solchermassen gebildete Stapel, welche Blechstreifen verschiedenster Grösse umfassen, nochmals sortiert werden müssen. Dies ist umständlich, oft gefährlich und verteuert das Endprodukt.

Ferner ist aus der Zeitschrift "Werkstatttechnik", 1965, Heft 5, Seite 224, die verstellbare Anordnung einer Anschlagleiste bekanntgeworden, welche in der Sollstellung starr positioniert ist.

Dies bedingt, dass die Blechabschnitte nur sehr langsam gegen den Anschlag gefördert werden können, da bei einer erhöhten Fördergeschwindigkeit der Anprall des Blechstückes auf die Anschlagleiste so heftig wäre, dass der Blechabschnitt stark beschädigt würde. Wird die Anschlagleiste in der Sollstellung elastisch abgestützt, so erfolgt ein Zurückfedern des Blechabschnittes, was wiederum unerwünscht ist, da dann eine genaue Positionierung verunmöglicht wird. Erfindungsgemäss wird von dem aus der vorstehend zitierten Zeitschrift bekannten Verfahren zum Wegführen und Stapeln von hinter der Schneidestelle einer Blechschere anfallenden Blechabschnitten mit Hilfe eines Anschlages und einer in der Ebene des Blechabschnittes verschiebbaren Stützeinrichtung ausgegangen, welche sich in der Ausgangsstellung über mehrere in der Verschieberichtung nebeneinander angeordnete Stapelstellen erstreckt und zur Freigabe der Stapelstellen über diese hinweg verschiebbar ist, während der den Stapelstellen entsprechend verschieden positionierbare Anschlag den auf der Stützeinrichtung bewegten Blechabschnitt abstreift.

Zur Vermeidung der geschilderten Nachteile ist das Verfahren nach der Erfindung dadurch gekennzeichnet, dass der in der Ausgangslage vor der Sollstellung positionierte Anschlag zusammen mit der Bewegung der Stützeinrichtung zuerst auf die Vorschubgeschwindigkeit des Blechabschnittes beschleunigt und anschliessend verzögert in die Sollstellung verschoben wird, wobei beim Auftreffen der vorderen Blechabschnittkante auf den Anschlag die beschleunigte Bewegung auf Verzögerung umgestellt wird.

Die zur Ausübung des Verfahrens geeignete Einrichtung weist eine Stützeinrichtung auf, welche auf einem ersten Schlitten angeordnet und mittels eines endlosen Kettenzuges zwischen Ausgangs- und Freigabestellung hin- und herbewegbar ist, wobei der Anschlag entlang der Bewegungsbahn der Stützeinrichtung mit Hilfe eines zweiten Schlitten durch einen zweiten Kettenzug bewegbar und in vorbestimmter Stellung positionierbar ist.

Auf beiliegender Zeichnung ist ein Ausführungsbeispiel des Erfindungsgegenstandes schematisch dargestellt.

Das dargestellte und anschliessend erläuterte Biespiel ist eine verfeinerte, in vielen Einzelheiten ergänzte Variante der Grundausführung.

Gemäss der schematischen Darstellung ist hinter dem nicht dargestellten Schneidmesser der Blechschneideeinrichtung eine Arbeitsfläche mit dem Stützrost 1 zur Aufnahme des abgeschnittenen Blechstreifens vorgesehen, welcher in der Pfeilrichtung 2 auf diesen Rost 1 gelangt. Anschliessend an den Stützrost 1 ist ein Kettenförderer 3 angeordnet und über vier Antriebsrollen 4 geführt, welche in einem separaten Gestell 5 untergebracht sind. Die Fortsetzung des Kettenförderers 3 bildet ein Stützrechen 6, dessen Auffangfläche 7 durch einen sich quer zur Förderrichtung erstreckenden und in der Förderrichtung verstellbaren Anschlag 8 begrenzt ist.

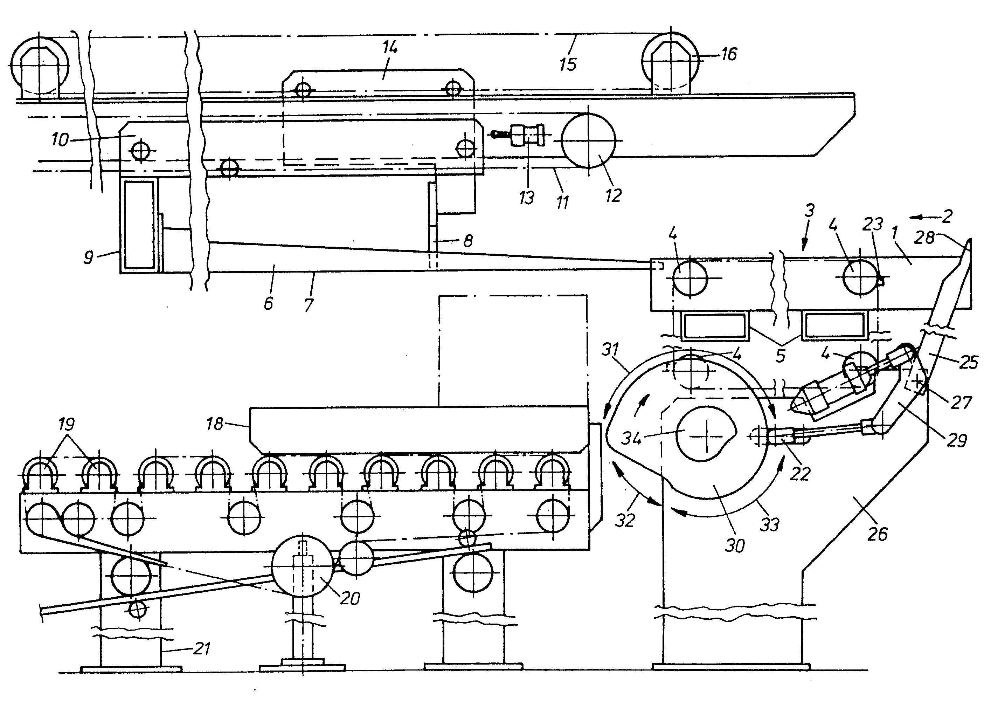

Der Stützrechen 6 ist an einem Querträger 9 und dieser an einem Schlitten 10 befestigt, welcher mittels eines endlos über Rollen 12 geführten Kettenzuges 11 hin- und herbeweglich ist. Mit 13 sind Endanschläge bezeichnet, welche die Hin- und Herbewegung des Schlittens 10 begrenzen. Von den Rollen 12 und Endanschlägen 13 sind in der Zeichnung aus Platzgründen nur je eine bzw. einer dargestellt.

Der Anschlag 8, welcher ebenfalls rechenartig ausgebildet ist und zwischen die Stäbe des Stützrechens 6 greift, ist an einem zweiten Schlitten 14 angeordnet, welcher mittels eines Kettenzuges 15 entlang des Stützrechens 6 hin- und her beweglich ist. Der Kettenzug 15 ist über Rollen 16 geführt, von welchen nur eine dargestellt ist.

Unterhalb des sich in der vorderen Endlage befindlichen Stützrechens 6 ist eine Palette 18 zur Aufnahme mehrerer nebeneinander liegender Stapel vorhanden. Die Palette 18 ist auf einem Rollgang 19 angeordnet, welcher durch einen Motor 20 angetriebene Rollen besitzt. Der ganze Rollgang 19 ist in einem Gestell 21 höhenverstellbar gelagert, so dass das Wachsen des Stapels durch Senken des Gestells 21 kompensiert werden kann. Sobald eine Palette 18 voll beladen ist, wird sie nach Absenken des Rollganges 19 abgeführt und eine neue leere Palette zugeführt.

Unterhalb des Stützrostes 1 sind Stossarme 25 in einem Gehäuse 26 um eine Achse 27 schwenkbar gelagert angeordnet, so dass das freie nach oben gerichtete Ende 28 jedes Stossarmes 25 (in der Zeichnung nur ein Arm dargestellt) zwischen den parallelen Stäben des Stützrostes 1 frei schwenkbar bleibt und sich etwas über die Förderebene des Stützrostes 1 erstreckt.

Die Schwenkbewegung der Stossarme 25 wird durch einen Kniehebel 29 bewirkt, welcher mit einem Fühler 22 in Verbindung steht, der gegen die Umfangsfläche einer Steuerscheibe 30 gepresst wird. Zum Antrieb der Steuerscheibe 30 dient ein nicht dargestellter Motor, wobei die Drehrichtung der Steuerscheibe im Uhrzeigersinne erfolgt.

Der Abschnitt 31 der Steuerscheibe 30 vermittelt eine Beschleunigungsbewegung an die Stossarme 25. Anschliessend folgt ein Abschnitt 32 für den Rückzug und der restliche Abschnitt 33 ist neutral und bewirkt keinerlei Bewegung der Stossarme. Durch den selben Motor wird eine gleichachsig angeordnete zweite Steuerscheibe 34 angetrieben, welche die Drehzahl eines Oelmotors (nicht dargestellt) regelt, welcher den Kettenförderer 3 antreibt.

Es ist vorteilhaft, wenn der Kettenförderer 3 samt Gestell 5 und Stossarmen 25 nebst Antrieb höhenverstellbar angeordnet ist. Vor dem Schneidvorgang befinden sich diese Teile in der oberen Stellung und werden mit der Messerbewegung nach unten gesenkt. Anschliessend kehren sie in die Ausgangslage zurück.

In einer ersten Phase wird das Blech in den Bereich der Schneidorgane der Blechschere gebracht, worauf ein Blechabschnitt von vorbestimmter Grösse abgeschnitten wird, welcher dann mit seiner rückwärtigen Kante in den Bereich der Stossarme 25 gelangt. Durch den Abschnitt 31 der rotierenden Steuers Scheibe 30 werden die Stossarme 25 mit konstanter Beschleunigung verschwenkt und der Blechabschnitt dem Kettenförderer 3 zugeführt.

Dieser weist Mitnehmernocken 23 auf, die auf die gleiche Geschwindigkeit beschleunigt werden, so dass die nachlaufende Kante des Blechabschnittes beim Verlassen der Stossarme 25 sofort von diesen Mitnehmernocken erfasst und weitergefördert wird.

Anschliessend gelangt der Blechabschnitt auf den Stützrechen 6, welcher vorerst stillsteht und erst kurz bevor die nachlaufende Kante des Blechabschnittes den Kettenförderer 3 verlässt, auf die Geschwindigkeit des Blechabschnittes beschleunigt wird. Dies geschieht durch eine entsprechende Steuerung des Antriebes des Schlittens 10, wobei der diesbezügliche Befehl durch einen entsprechenden Initiator oder Fühler erteilt und direkt vom Blechabschnitt ausgelöst wird. Der Stützrechen 6 wird samt Blechabschnitt gegen den Anschlag 8 zurückgezogen. Bevor jedoch die vorlaufende Kante des Blechabschnittes auf den Anschlag 8 stösst, welcher vor der Sollstellung positioniert ist, wird dieser durch den Antrieb des Schlittens 14 beschleunigt und auf die gleiche Geschwindigkeit wie die Geschwindigkeit des Blechabschnittes auf dem Stützrechen 6 gebracht und anschliessend bis zum Stillstand verzögert. Annähernd bei der Umstellung von Beschleunigung auf Verzögerung wird die vorlaufende Kante des Blechabschnittes den Anschlag 8 berühren, so dass der Blechabschnitt sanft abgebremst wird. Der Stützrechen 6 läuft dagegen mit unverminderter Geschwindigkeit bis zum vollständigen Rückzug desselben aus dem Bereiche der Stapelstellen. Der Blechabschnitt fällt je nach der Stellung des Anschlages 8 auf einen der Stapelplätze auf der Palette 18. Je nach Bedarf können mehrere Paletten 18 mit je zwei oder mehreren Stapelplätzen in Richtung parallel zum Schneidmesser nebeneinander angeordnet sein, die je nach Bedarf, nacheinander oder abwechselnd, bedient werden. Die vollen Paletten 18 werden dann auf dem Rollgang 19 abgeführt. Um die Fallhöhe der Blechabschnitte konstant zu halten, ist es möglich, den ganzen Rollgang 19 in der Höhe verstellbar zu halten, in der Weise, dass mit wachsendem Stapel der Rollgang 19 samt Palette 18 gesenkt wird.

An Stelle von paletten 18 können auch Stepalbehälter Verwendung finden, wobei die gefüllten Stapelbehälter auf dem Rollgang abtransportiert werden.

Bei dieser Ausführung wird das Blech sehr schonend behandelt, so dass ein Verkratzen der Blechoberfläche praktisch ausgeschlossen bleibt. Jede stoss- oder schlagartige Bewegung des Bleches bzw. der Blechabschnitte wird vermieden.

## Patentansprüche

1. Verfahren zum Wegführen und Stapeln von hinter der Schneidestelle einer Blechschere anfallenden Blechabschnitten mit Hilfe eines Anschlages (8) und einer in der Ebene der Blechabschnitte verschiebbaren Stützeinrichtung (6), welche sich in der Ausgangstellung über mehrere in der Verschieberichtung nebeneinander angeordnete Stapelstellen erstreckt und zur Freigabe der Stapelstellen über diese hinweg verschiebbar ist, während der den Stapelstellen entsprechend verschieden positionierbare Anschlag (8) den auf der Stützeinrichtung (6) bewegten Blechabschnitt abstreift, dadurch gekennzeichnet, dass der in der Ausgangslage vor seiner Sollstellung positionierte Anschlag (8) zusammen mit der Bewegung der Stützeinrichtung (6) zuerst auf die Vorschubgeschwindigkeit des Blechabschnittes beschleunigt und anschliessend verzögert in die Sollstellung verschoben wird, wobei beim Auftreffen der vorderen Blechabschnittkante auf den Anschlag die beschleunigte Bewegung auf Verzögerung umgestelle wird.

2. Einrichtung zur Ausübung des Verfahrens nach Anspruch 1, dadurch gekennzeichnet, dass die Stützeinrichtung (6) auf einem ersten Schlitten (10) angeordnet und mittels eines endlosen Kettenzuges (11) zwischen Ausgangs- und Freigabestellung hin- und herbewegbar ist und dass der Anschlag (8) entlang der Bewegungsbahn der Stützeinrichtung (6) mit Hilfe eines zweiten Schlittens (14) durch einen zweiten Kettenzug (15) bewegbar und in vorbestimmten Stellungen positionierbar ist, wobei zur Steuerung des Antriebes des den Anschlag (8) tragenden Schlittens (14) ein Initiator oder Fühler vorhanden ist, welcher direkt vom Blechabschnitt ausgelöst wird.

3. Einrichtung nach Anspruch 2, dadurch gekennzeichnet, dass zwischen der Schneidstelle und der Stützeinrichtung (6) ein Kettenförderer (3) angeordnet ist, welchem Stossarme (25) zugeordnet sind, die den abgeschnittenen Blechstreifen an der nachlaufenden Kante ergreifen und dem Kettenförderer (3) zuführen.

4. Einrichtung nach Ansprüchen 3, dadurch gekennzeichnet, dass zum Bewegen der Stossarme (25) eine Steuerscheibe (30) vorhanden ist, welche Steuerabschnitte (31 und 32) zur beschleunigten Vorwärts-Bewegung und für den Rückzug der Stossarme (25) sowie einen neutralen Abschnitt (33) aufweist, welcher keinerlei Bewegung an die Stossarme (25) vermittelt.

5. Einrichtung nach den Ansprüchen 3 oder 4, dadurch gekennzeichnet, dass zum Antrieb des Kettenförderers (3) ein Oelmotor vorhanden ist, dessen Drehzahl durch eine zweite Steuerscheibe (34) gesteuert wird.

6. Einrichtung nach einem der Ansprüche 2 bis 5, dadurch gekennzeichnet, dass unterhalb der Stützeinrichtung (6) ein höhenverstellbarer Rollgang (19) zur Aufnahme der für das Stapeln der Bleche zugeführten Paletten (18) oder Stapelbehälter angeordnet ist.

**Revendications**

1. Procédé d'évacuation et d'empilage de coupes de tôle arrivant en aval d'un cisoir, à l'aide d'une butée (8) et d'un mécanisme de support (6) pouvant coulisser dans le plan des coupes de tôle et qui, dans sa position de départ, s'étend sur plusieurs aires d'empilage juxtaposées dans la direction du coulissement et qui peut coulisser au-dessus de ces aires d'empilage, pour libérer celles-ci, tandis que la butée (8) qui peut être positionnée sélectivement au-dessus des différentes aires d'empilage fait glisser la coupe de tôle transportée par le mécanisme de support (6), caractérisé en ce que la butée (8) qui est placée, en position de départ, en avant de sa position d'arrêt prescrite, est déplacée, conjointement avec le mouvement du mécanisme de support (6), tout d'abord en étant accélérée jusqu'à la vitesse d'avancement du tronçon de tôle puis en étant ralentie jusqu'à la position d'arrêt prescrite, la commutation entre l'accélération et la décélération ayant lieu lorsque le chant antérieur du tronçon de tôle vient au contact de la butée.

2. Dispositif pour la mise en oeuvre du procédé suivant la revendication 1, caractérisé en ce que le mécanisme de support (6) est monté sur un premier chariot (10) qui coulisse, au moyen d'un train de chaînes sans fin (11), suivant un mouvement de va-et-vient, entre sa position de départ et sa position de libération des coupes, tandis que la butée (8) peut se déplacer, le long de la trajectoire du mécanisme de support (6), à l'aide d'un second chariot (14) entraîné par un second train de chaînes (15), cette butée pouvant être positionnée en des points préalablement choisis, la commande du mécanisme moteur du chariot (14) portant la butée (8) étant réalisée à l'aide d'un commutateur capacitif ou d'un palpeur dont l'action est déclenchée directement par le passage de la coupe de tôle.

3. Dispositif suivant la revendication 2, caractérisé en ce qu'un convoyeur à chaînes (3) est disposé entre le point de cisaillement des coupes de tôle et le mécanisme de support (6) et en ce qu'à ce convoyeur sont associés des bras pousseurs (25) qui saisissent la coupe de tôle par son chant postérieur pour l'amener au convoyeur à chaînes (3).

4. Dispositif suivant la revendication 3, caractérisé en ce que le mouvement des bras pousseurs (25) est commandé par un disque à came (30) dont la périphérie comporte des secteurs actifs (31) et (32) provoquant le mouvement d'avancement accéléré et le retrait des bras pousseurs (25), ainsi qu'un secteur neutre (33) qui ne provoque aucun mouvement des bras pousseurs (25).

5. Dispositif suivant l'une quelconque des revendications 3 ou 4, caractérisé en ce que l'entraînement du convoyeur à chaînes (3) est assuré par un moteur hydraulique à huile dont la vitesse de rotation est commandée par un second disque à came (34).

6. Dispositif suivant l'une quelconque des revendications 2 à 5, caractérisé en ce qu'un convoyeur à rouleaux (19) réglable en hauteur est placé au dessous du mécanisme de support (6) pour recevoir les palettes (18) ou les caisses d'empilage amenées pour l'empilage des coupes de tôle.

## Claims

1. Method for the removal and stacking of sheet-metal portions, obtained behind the cutting station of a sheet-metal cutting device, by means of a stop member (8) and a supporting device (6) displaceable in the plane of the sheet-metal portions, which supporting device, in the starting position, extends over a plurality of stacking stations disposed side-by-side in the displacement direction and can be moved away over these stacking stations so as to free them, while the stop member (8), which can be differently positioned in accordance with the stacking stations, slicks off the sheet-metal portion moved on the supporting device (6), characterised in that the stop member (8), positioned in the starting position ahead of its required position together with the movement of the supporting device (6), is initially accelerated to the feed speed of the sheet-metal portion and subsequently retarded as displaced into the required position, in which case when the front edge of the sheet-metal portion encounters the stop member the accelerated movement is changed over to retardation.

2. Apparatus for carrying out the method according to claim 1, characterised in that the supporting device (6) is arranged on a first carriage (10) and by means of an endless chain drive (11) can be moved backward and forward between starting position and release position, and in that the stop member (8) is movable along the path of movement of the supporting device (6) by means of a second carriage (14) by a second chain drive (15) and can be positioned in predetermined positions, an initiator or sensor being provided for controlling the drive of the carriage (14) carrying the stop member (8), which initiator or sensor is triggered directly by the sheet-metal portion.

3. Apparatus according to claim 2, characterised in that between the cutting station and the support device (6) is arranged a chain conveyor (3) with which are associated thrust arms (25) which engage the severed sheet-metal strips at their rear edges and forward them to the chain conveyor (3).

4. Apparatus according to claim 3, characterised in that for moving the thrust arms (25) a control disc (30) is provided which has control portions (31 and 32) for the accelerated forward movement and for the withdrawal of the thrust arms (25) and also a neutral portion (33) which does not impart any movement to the thrust arms (25).

5. Apparatus according to claims 3 or 4, characterised in that for driving the chain conveyor (3) an oil motor is provided, the speed of rotation of which is controlled by a second control disc (34).

6. Apparatus according to one of claims 2 to 5 characterised in that below the supporting device (6) is arranged a vertically adjustable table of motor driven rollers (19) for receiving the pallets (18) or stack containers supplied for stacking the metal sheets.

0 009 462